# EUROPÄISCHE PATENTSCHRIFT

(11) **EP 1 771 713 B1**
(45) Veröffentlichungstag und Bekanntmachung des Hinweises auf die Patenterteilung: **30.11.2011**
(21) Anmeldenummer: 05763553.4
(22) Anmeldetag: 27.07.2005
(51) Int. Cl.: G01M 1/36

(54) **WUCHTRING UND VERFAHREN ZUM AUSWUCHTEN EINES ROTIERENDEN BAUTEILS**
BALANCE RING AND METHOD FOR BALANCING A ROTATING COMPONENT
ANNEAU D'EQUILIBRAGE ET PROCEDE D'EQUILIBRAGE D'UNE PARTIE STRUCTURALE ROTATIVE

(30) Priorität: 27.07.2004 DE 102004036394
(43) Veröffentlichungstag der Anmeldung: 11.04.2007
(73) Patentinhaber: Franz Haimer Maschinenbau KG, 86568 Hollenbach-Igenhausen (DE)
(72) Erfinder: HAIMER, Franz, 86568 Hollenbach-Igenhausen (DE)
(74) Vertreter: Liska, Horst
(86) Internationale Anmeldenummer: PCT/EP2005/008152
(87) Internationale Veröffentlichungsnummer: WO 2006/010607

(56) Entgegenhaltungen:
- WO-A-94/16852

## Beschreibung

Die Erfindung betrifft einen Wuchtring sowie ein Verfahren zum Auswuchten eines um eine Drehachse rotierenden Bauteils, insbesondere eines Werkzeughalters oder dergleichen.

Rotierende Maschinenelemente, wie z.B. mit- der Antriebsspindel einer Werkzeugmaschine kuppelbare Werkzeughalter für Bohrer, Fräser oder dergleichen, aber auch sonstige rotierende Bauteile, wie z.B. Spindeln oder Wellen, werden herkömmlich mit Hilfe von Wuchtringen ausgewuchtet, die paarweise axial nebeneinander konzentrisch zur Drehachse des Bauteils drehbar an diesem gelagert sind. Die beiden Wuchtringe haben exzentrische Massenschwerpunkte, deren von der Relativdrehstellung der beiden Wuchtringe abhängige, resultierende Unwuchtkraft beim Auswuchten des Bauteils der Unwuchtkraft des Bauteils kompensierend entgegengerichtet eingestellt wird. Durch Verdrehen der Wuchtringe relativ zueinander kann die Größe der resultierenden Unwuchtkraft der Wuchtringe verändert werden. Durch gemeinsames Verdrehen der beiden Wuchtringe kann die Wirkungsrichtung der resultierenden Unwuchtkraft verändert werden. Eine solche Vorrichtung ist z.B. in WO 94/16852 A offenbart.

Herkömmliche Wuchtringpaare setzen exakt bearbeitete Dreh-Führungsflächen voraus und benötigen vergleichsweise großen Bauraum. Demgegenüber ist es Aufgabe der Erfindung, einen justierbaren Wuchtring mit bezogen auf die maximale Unwucht des Wuchtrings verkleinerten Abmessungen zu schaffen.

Der erfindungsgemäße Wuchtring für ein um eine Drehachse rotierendes Bauteil, insbesondere einen Werkzeughalter oder dergleichen, umfasst:
- einen bezogen auf eine Rotationssymmetrieachse rotationssymmetrischen Ringkörper,
- eine den Ringkörper mit zur Drehachse des Bauteils paralleler Rotationssymmetrieachse radial beweglich, jedoch axial fixiert an dem Bauteil führende Führungsanordnung, und
- mehrere in Umfangsrichtung des Ringkörpers, vorzugsweise in gleichen Winkelabständen voneinander angeordnete, zwischen dem Ringkörper und dem Bauteil radial abgestützte Stellelemente mit veränderbarer radialer Abstützlänge.

Ein solcher Wuchtring ist insgesamt rotationssymmetrisch, wobei unter einer rotationssymmetrischen Gestaltung hier und im Folgenden eine Form verstanden werden soll, die bei Drehung um die Rotationssymmetrieachse in Winkelschritten gleichbleibender Größe jeweils zur Deckung mit sich selbst gebracht werden kann. Eine solche Form läßt sich sehr exakt und reproduzierbar herstellen. Anders als bei herkömmlichen Wuchtringpaaren, die um die Drehachse des Bauteils drehbar an diesem geführt sein müssen, wird der erfindungsgemäße Wuchtring zentrisch, jedoch in Umfangsrichtung stationär an dem Bauteil befestigt. Der in seiner Grundstellung zur Drehachse des Bauteils zentrische Ringkörper ist mittels der Führunsganordnung in Umfangsrichtung allseitig radial auslenkbar an dem Bauteil geführt, wobei die Winkellage, in der der Ringkörper relativ zu dem Bauteil radial ausgelenkt wird und das Ausmaß der radialen Auslenkung die Größe und Richtung der zur Kompensation einer eventuellen Unwucht des Bauteils bestimmten Unwuchtkraft festliegt. In Umfangsrichtung verteilt sind drei oder mehr Stellelemente vorgesehen, die es erlauben, den Ringkörper mit zur Drehachse im Wesentlichen paralleler Rotationssymmetrieachse, jedoch nach Größe und Richtung wählbarer Exzentrizität, relativ zum Bauteil zu fixieren.

Die Führungsanordnung sorgt in erster Linie dafür, dass der Ringkörper mit zur Drehachse des Bauteils im Wesentlichen paralleler Rotationssymmetrieachse radial beweglich an dem Bauteil geführt ist. Hierfür geeignet sind z. B. in axialem Abstand voneinander angeordnete, ringscheibenförmige, achsnormal zur Drehachse verlaufende Ringscheibenflächen, zwischen welchen der Ringkörper radial verschiebbar sitzt. Von besonderem Vorteil sind jedoch Ausgestaltungen, bei welchen der Ringkörper mittels einer allseitig radial auslenkbaren Federlenkeranordnung an dem Bauteil fixiert ist. Diese Ausgestaltung hat den Vorteil, dass der Ringkörper eine zur Drehachse des Bauteils konzentrische Ruhelage einnehemen kann, aus der er mittels der Stellelemente gegen die Federkräfte der Federlenkeranordnung ausgelenkt werden kann. Der Ringkörper kann auf diese Weise selbsttätig seine zentrische Ruhelage einnehmen, in der die Unwucht des Bauteils bestimmt werden kann, ohne dass diese Unwucht durch Exzentrizitäten des Ringkörpers verfälscht wird. In einer bevorzugten Ausgestaltung ist vorgesehen, dass die Führungsanordnung einen an einer zylindrischen, zur Drehachse konzentrischen Umfangsfläche des Bauteils anliegenden Haltering aufweist, der über die allseitig radial auslenkbare Federlenkeranordnung mit dem Ringkörper verbunden ist. Die Ruhelage kann jedoch exzentrisch zur Drehachse des Bauteils liegen, da die Exzentrizität auch beim Wuchtvorgang berücksichtigt werden kann.

Die Federlenkeranordnung kann, längs eines zur Rotationssymmetrieachse konzentrischen Kreises angeordnet, wenigstens ein im Wesentlichen in Richtung der Rotationssymmetrieachse sich erstreckendes, radial auslenkbares Federelement umfassen, das - axial gesehen - mit seinem einen Endbereich am Haltering und mit seinem anderen Endbereich mit dem Ringkörper verbunden ist. Eine solche Federlenkeranordnung arbeitet nach dem Prinzip einer Parallellenkeranordnung mit elastischen Lenkern. Das Federelement kann hierbei als zur Rotationssymmetrieachse konzentrische, radial elastisch auslenkbare Hülse ausgebildet sein. Die Hülse kann eine ringförmig geschlossene Hülsenwand haben, sie kann aber auch in Umfangsrichtung durch mehrere axial verlaufende Schlitze in radial auslenkbare Federsegmente oder Federstege unterteilt sein. Es versteht sich, dass die Schlitzbreite ggf. auch größer sein kann als die Breite dieser Federsegmente in Umfangsrichtung.

In einer Variante kann die Federlenkeranordnung in Umfangsrichtung des Ringkörpers verteilt mehrere Paare in Umfangsrichtung sich erstreckender Federstege, insbesondere mehrere Paare solcher Federstege umfassen, die mit ihren in Umfangsrichtung benachbarten Enden paarweise an dem Ringkörper oder paarweise an dem Haltering gehalten sind, und mit ihren in Umfangsrichtung entfernt gelegenen Enden an der jeweils anderen Komponente - Haltering oder Ringkörper - gehalten sein. Vorteil der letztgenannten Federstege ist, dass sie vergleichsweise lange federnde Steglängen ermöglichen, und bei der Radialverschiebung des Ringkörpers in der Lage sind, diesen exakt radial zu führen.

Bei dem Ringkörper, der Federanordnung und dem Haltering kann es sich um gesondert hergestellte Bauelemente handeln, die nachträglich zu dem Wuchtring vereinigt werden. In einer bevorzugten Ausgestaltng sind jedoch der Ringkörper, die Federanordnung und der Haltering integral einteilig ausgebildet, was die Präzision des Wuchtrings verbessert.

Bei dem Haltering kann es sich um einen geschlossenen Ring handeln, der passgenau auf eine entsprechende Umfangsfläche des Bauteils aufgeschoben und befestigt wird. Zweckmäßigerweise wird der Haltering durch Wärmeschrumpftechnik an dem Bauteil befestigt. Es versteht sich, dass auch andere, herkömmliche Befestigungsarten genutzt werden können, beispielsweise durch Anschrauben an dem Bauteil oder durch Anklemmen mittels Klemmschrauben. Es versteht sich, dass der Haltering an dem Bauteils auch angelötet, anschweißt oder angeklebt werden kann. Auch ist denkbar, den Haltering mit einem Innengewinde zu versehen, über das er an dem Bauteil angeschraubt werden kann.

Der Haltering kann jedoch auch als segmentierter Ring ausgebildet sein, dessen Segmente über die Federanordnung mit dem Ringkörper verbunden sind. Die Halteringsegmente können radialelastische Eigenschaften haben, wodurch der Wuchtring über einen radial federnden Klemmsitz an dem Bauteil gehalten werden kann. Auch hier können jedoch die vorangegangen erläuterten Befestigungsarten eingesetzt werden.

Bei den Stellelementen kann es sich um radial verschraubbare Stellschrauben handeln. Die Stellschrauben können in ein Gewinde des Halterings geschraubt sein und sich an dem Ringkörper abstützen. Einfacher herstellbar und einfacher einstellbar ist jedoch eine Variante, in der die Stellschrauben in Schraublöchern des Ringkörpers angeordnet sind und sich an dem Haltering oder direkt an dem Bauteil abstützen.

Es versteht sich, dass anstelle radial beweglicher Stellelemente auch andere den Ringkörper radial auslenkende Stellelemente vorgesehen sein können. Geeignet sind beispielsweise Stellelemente auf der Basis von Schrägflächenführungen oder Lenkerführungen, die eine von der Radialbewegung abweichende Stellbewegung des Lenkerelements zulassen. Beispielsweise kann das Stellelement als Keilflächengetriebe ausgebildet sein, bei welchem der entweder in Umfangsrichtung, vorzugsweise aber in Axialrichtung bewegliche Keil den Ringkörper radial verstellt. Verläuft die Stellbewegung eines solchen Stellelements parallel zur Drehachse, so beeinflussen die Stellelemente die Winkellage des Unwuchtvektors des Ringkörpers nicht.

Bei den vorstehend erläuterten Stellelementen handelt es sich um mechanische Getriebeelemente, die eine Veränderung der Abstützlänge erlauben. In einer Variante kann vorgesehen sein, dass die Führungsanordung einen an einer zylindrischen, zur Drehachse konzentrischen Umfangsfläche des Bauteils anliegenden Haltering aufweist, an dem der Ringkörper über mehrere in Umfangsrichtung verteilte, die Stellelemente bildende Aktuatoren mit elektrisch steuerbarer radialer Abstützlänge abgestützt ist. Bei solchen Aktuatoren kann es sich um piezoelektrische Elemente oder Nano-Tube-Elemente oder dergleichen handeln, die beim Anlegen einer elektrischen Spannung bzw. eines Stroms ihre räumlichen Abmessungen verändern.

Unter einem zweiten Aspekt betrifft die Erfindung ein Verfahren zum Auswuchten eines um eine Drehachse rotierenden Bauteils mittels eines an dem Bauteil angebrachten Wuchtrings. Das Verfahren ist dadurch gekennzeichnet, dass an dem Bauteil ein Wuchtring mit einem radial beweglich an dem Bauteil geführten Ringkörper angebracht wird, der über mehrere in Umfangsrichtung des Ringkörpers, vorzugsweise in gleichen Winkelabständen voneinander angeordnete Stellelemente mit veränderbarer Abstützlänge relativ zu dem Bauteil abgestützt ist, dass das Bauteil zusammen mit dem Wuchtring um die Drehachse rotierend angetrieben und ein die Größe und Richtung der hierbei auftretenden Unwuchtkraft repräsentierender Parameter gemessen wird, und dass abhängig von dem gemessenen Unwuchtparameter die Abstützlänge der Stellelemente verändert wird, derart, dass der Ringkörper in eine die Unwuchtkraft kompensierende radiale Position verschoben wird. Zweckmäßigerweise werden hierbei abhängig von dem gemessenen Unwuchtparameter Längeneinstellinformationen für die Stellelemente ermittelt. Dies kann beispielsweise so erfolgen, dass auf einem Display der den Unwuchtparameter messenden Wuchtmaschine angezeigt wird, um welchen Wert jedes der Stellelemente in seiner Abstützlänge verändert werden muss, um die Unwucht des Bauteils zu kompensieren. Soweit Stellschrauben als Stellelemente vorgesehen sind, kann das Display die Zahl und Richtung der Umdrehungen angeben, um die jede einzelne Stellschraube zu drehen ist.

Im Folgenden werden Ausführungsbeispiele der Erfindung anhand einer Zeichnung näher erläutert. Hierbei zeigt:
- Fig. 1: eine teilweise aufgebrochene Axialansicht eines Wuchtrings gemäß der Erfindung;
- Fig. 2: einen Axiallängsschnitt des Wuchtrings, gesehen entlang einer Linie II-II in Fig. 1;
- Fig. 3: eine teilweise aufgebrochene Axialansicht einer ersten Variante des Wuchtrings aus Fig. 1;
- Fig. 4: einen Axiallängsschnitt der ersten Variante, gesehen entlang einer Linie IV-IV in Fig. 3;
- Fig. 5: eine teilweise aufgebrochene Axialansicht einer zweiten Variante des Wuchtrings aus Fig. 1;
- Fig. 6: einen Axiallängsschnitt durch die zweite Variante, gesehen entlang einer Linie VI-VI in Fig. 5;
- Fig. 7: eine teilweise aufgebrochene Axialansicht einer zweiten Ausführungsform eines Wuchtrings;
- Fig. 8: einen Axiallängsschnitt durch die zweite Ausführungsform, gesehen entlang einer Linie VIII-VIII in Fig. 7;
- Fig. 9: eine teilweise aufgebrochene Axialansicht einer dritten Ausführungsform eines Wuchtrings, und
- Fig. 10 bis 12: teilweise aufgebrochene Axialansichten von Varianten des Wuchtrings in Fig. 9.

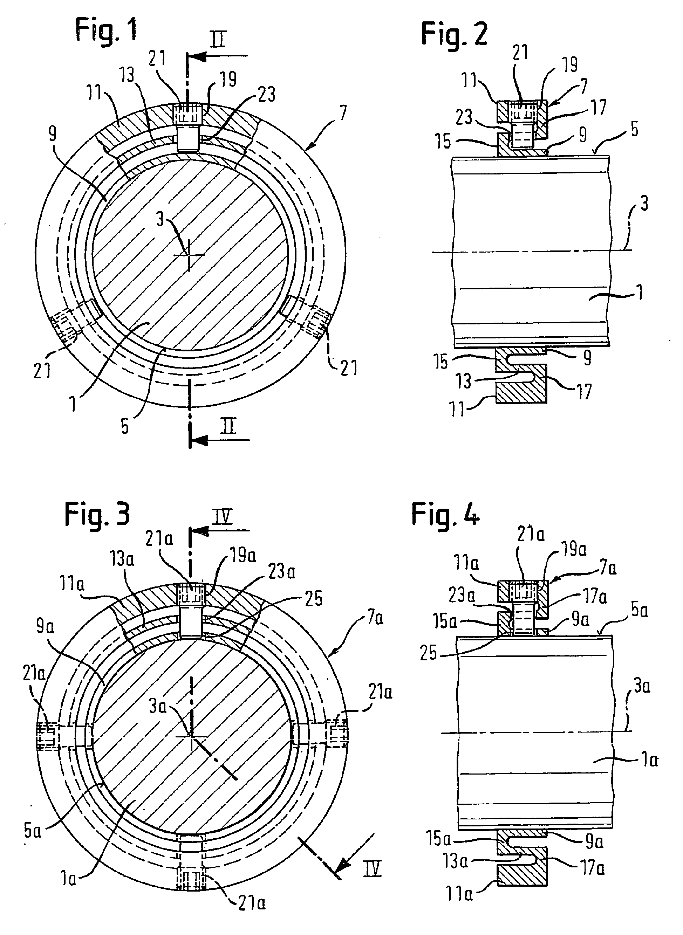

Zum Auswuchten eines in den Fig. 1 und 2 allgemein mit 1 bezeichneten, um eine Drehachse 3 rotierenden Bauteils, beispielsweise eines Werkzeughalters, eines Werkzeugs, einer Welle oder einer Arbeitsspindel einer Maschine, ist auf einer kreiszylindrischen Umfangsfläche 5 des Bauteils ein radial einstellbarer Wuchtring 7 befestigt. Der Wuchtring 7 hat einen ringförmig geschlossenen Haltering 9, mit dem er z.B. im Schrumpfsitz auf der Umfangsfläche 5 gehalten ist, sowie einen eine radial verstellbare Wuchtmasse bildenden Ringkörper 11, der über eine Federlenkeranordnung in Form einer koaxial zur Drehachse 3 radial zwischen dem Haltering 9 und dem Ringkörper 11 sich erstreckenden Hülse 13 mit dem Haltering 9 verbunden ist. Die Hülse 13 hat im Wesentlichen eine ringförmig geschlossene Umfangswand und ist an ihrem einen Ende über ihren gesamten Umfang mittels eines Radialstegs 15 mit dem Haltering 9 und an ihrem axial anderen Ende über ihren gesamten Umfang mittels eines Radialstegs 17 mit dem Ringkörper 11 verbunden.

Die Hülse 13 hält den Ringkörper 11 in einer zur Drehachse 3 konzentrischen Ruhelage, aus der der Ringkörper 11 unter radialelastischer Verformung der Hülse 13 mit im Wesentlichen zur Drehachse 3 paralleler Rotationssymmetrieachse radial federnd auslenkbar ist. Die Hülse 13 wirkt hierbei in Umfangsrichtung allseitig nach Art einer Parallellenkeranordnung.

In Umfangsrichtung, in gleichen Winkelabständen verteilt, sitzen in Gewindelöchern 19 des Ringkörpers 11 drei von radial außen zugängliche, radial verschraubbare Stellschrauben 21, die die Hülse 13 in Durchgangslöchern 23 durchsetzen und sich am Außenumfang des seinerseits am Bauteil fixierten Halterings 9 abstützen. Durch Verschrauben der Stellschrauben 21 kann der Ringkörper 11 aus seiner zur Drehachse 3 konzentrischen Ruhelage mit zur Drehachse 3 im Wesentlichen paralleler Rotationssymmetrieachse radial in eine exzentrische Lage verstellt werden, wobei die Größe und Winkellage der Exzentrizität durch die Einstellung der drei Stellschrauben 21 wählbar ist. Die Exzentrizität des Ringkörpers 11 wird so gewählt, dass die von dem Ringkörper 11 und ggf. der Hülse 13 erzeugte Unwuchtkraft eine eventuelle Unwucht des Bauteils 1 kompensiert.

Die Unwucht des Bauteils 1 wird herkömmlich bei Rotation auf einer Wuchtmaschine nach Größe und Winkellage gemessen. Die Wuchtmaschine ermittelt entsprechend dem so bestimmten Unwuchtparameter die zum Ausgleich der Unwucht erforderliche Größe und Winkellage der Exzentrizität des Wuchtrings 7 und liefert zweckmäßigerweise Justierparameter für die Stellschrauben 21, beispielsweise in Form von Schraubwinkelinformationen für jede der Stellschrauben 21. Es versteht sich, dass die Unwuchtparameter nicht zwingend ausgehend von der Ruhelage des Ringkörpers 11 bestimmt werden müssen. Geeignet ist vielmehr jede, auch exzentrische Stellung des Ringkörpers 11, die dann zu Einstellwerten für die Stellschrauben 21 führt, die die willkürliche Ausgangsposition des Ringkörpers 11 berücksichtigen.

Im vorangegangen beschriebenen Ausführungsbeispiel ist der Haltering 9 auf die Umfangsfläche 5 des Bauteils 1 im Wärmeschrumpfverfahren aufgeschrumpft, so dass er durch Presssitzkräfte an dem Bauteil 1 gehalten ist. Es versteht sich, dass der Haltering 9 auch anderweitig an dem Bauteil 1 befestigt sein kann, beispielsweise angeschweißt, angelötet oder angeklebt sein kann. Auch kann der Haltering 9 formschlüssig befestigt sein, beispielsweise mittels eines Gewindes an seinem Innenumfang oder aber er kann durch Klemmmittel, beispielsweise Klemmschrauben oder dergleichen fixiert oder angeschraubt sein.

Der Haltering 9, die Hülse 13 und der Ringkörper 11 sind integral einstückig miteinander verbunden und bestehen vorzugsweise aus Metall.

Im Folgenden werden Varianten und Ausgestaltungen des Wuchtrings erläutert. Gleich wirkende Komponenten sind jeweils mit vorangegangen erläuterten Bezugszahlen bezeichnet und zur Unterscheidung mit einem Buchstaben versehen. Zur Erläuterung des Aufbaus, der Wirkungsweise und eventueller Varianten wird jeweils auf die vorangegangene Beschreibung Bezug genommen.

Der Wuchtring 7 gemäß den Figuren 1 und 2 hat drei um 120° gegeneinander winkelversetzt an dem Ringkörper 11 radial verschraubbare Stellschrauben 21. Die Figuren 3 und 4 zeigen eine Variante eines Wuchtrings 7a, der im Unterschied zum Wuchtring 7 der Figuren 1 und 2 vier um jeweils 90° gegeneinander winkelversetzte Stellschrauben 21 a radial verschraubbar an seinem Ringkörper 11a umfasst. Die Stellschrauben 21a stützen sich darüber hinaus nicht an dem Haltering 9a ab, sondern durchsetzen Durchtrittsöffnungen 25 des Halterings 9a und stützen sich direkt an der Umfangsfläche 5a des Bauteils 1a ab.

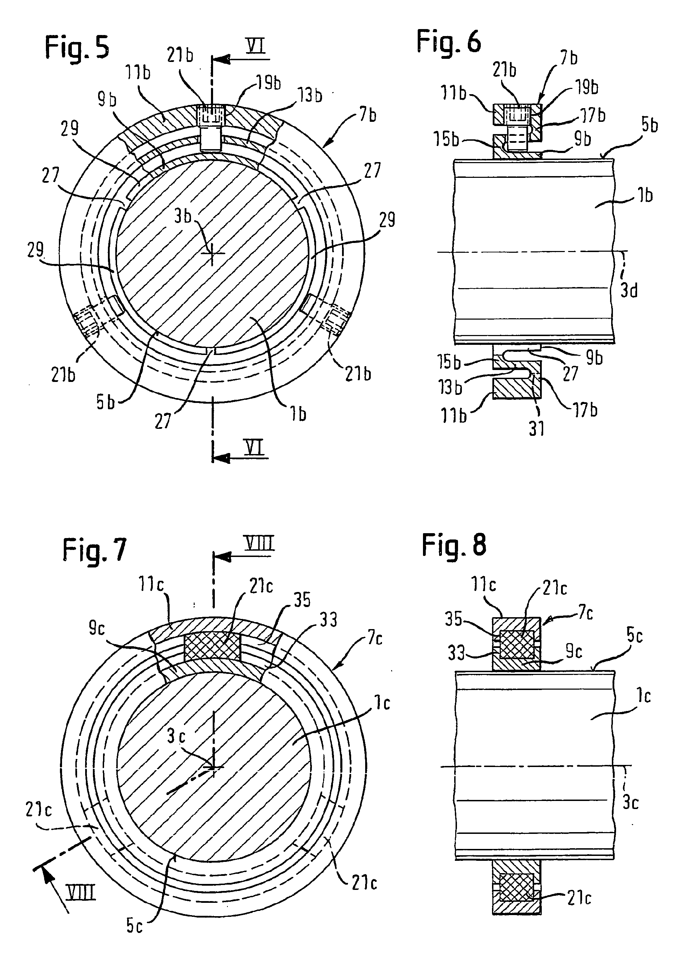

Die Figuren 5 und 6 zeigen eine weitere Variante des anhand der Figuren 1 und 2 erläuterten Wuchtrings 7, dessen Haltering 9 ringförmig geschlossen ist. Im Unterschied dazu ist der Haltering 9b des Wuchtrings 7b der Figuren 5 und 6 durch mehrere Schlitze 27 in Segmente 29 unterteilt, die radial federnd am Umfang 5b des Bauteils 1b anliegen und den Wuchtring 7b an dem Bauteil 1b fixieren. Die Schlitze 27 können auf den Haltering 9b beschränkt sein. Sie können sich aber auch in die Radialstege 15b und ggf. die Hülse 13b und den Radialsteg 17b hinein erstrecken, wie dies bei 31 in Figur 6 angedeutet ist. Wenngleich sich die Stellschrauben 21 b auch direkt am Bauteil 1b abstützen können, so stützen sie sich hier bevorzugt an den Segmenten 29 ab, um die Fixierung des Wuchtrings 7b an dem Bauteil 1b zu verbessern. Es versteht sich, dass anstelle der in Figur 5 dargestellten drei Stellschrauben 21 b auch mehr Stellschrauben vorhanden sein können.

In den Ausführungsformen der Figuren 1-6 sind die Stellelemente als manuell zu bedienende Stellschrauben ausgebildet. Die Figuren 7 und 8 zeigen die Variante eines Wuchtrings 7c, bei welchem die Stellelemente als elektrisch steuerbare Aktuatoren 21c ausgebildet sind, die bei nicht näher dargestellter Zuführung elektrischer Signale ihre radialen Abmessungen ändern. Bei den Aktuatoren 21c handelt es sich beispielsweise um piezoelektrische Elemente oder Nano-Tube-Elemente oder dergleichen. Die Aktuatoren 21c sitzen in Führungsöffnungen am Außenmantel des Halterings 9c einerseits und am Innenmantel des Ringkörpers 11 c andererseits und übernehmen so zugleich die radiale und axiale Führung und Fixierung des Ringkörpers 11c am Haltering 9c. Die Führungsöffnungen können, wie in den Figuren 7 und 8 dargestellt, als Ringnuten 33 bzw. 35 ausgebildet sein, in welchen die Aktuatoren 21c in jeweils gleichen Winkelabständen voneinander fixiert sind. Es versteht sich, dass elektrisch steuerbare Aktuatoren auch bei den vorangegangen erläuterten und den nachfolgenden Ausführungsbeispielen eingesetzt werden können. Der Haltering 9c kann in der vorangegangen erläuterten Weise am Außenumfang 5c des Bauteils 1c befestigt sein.

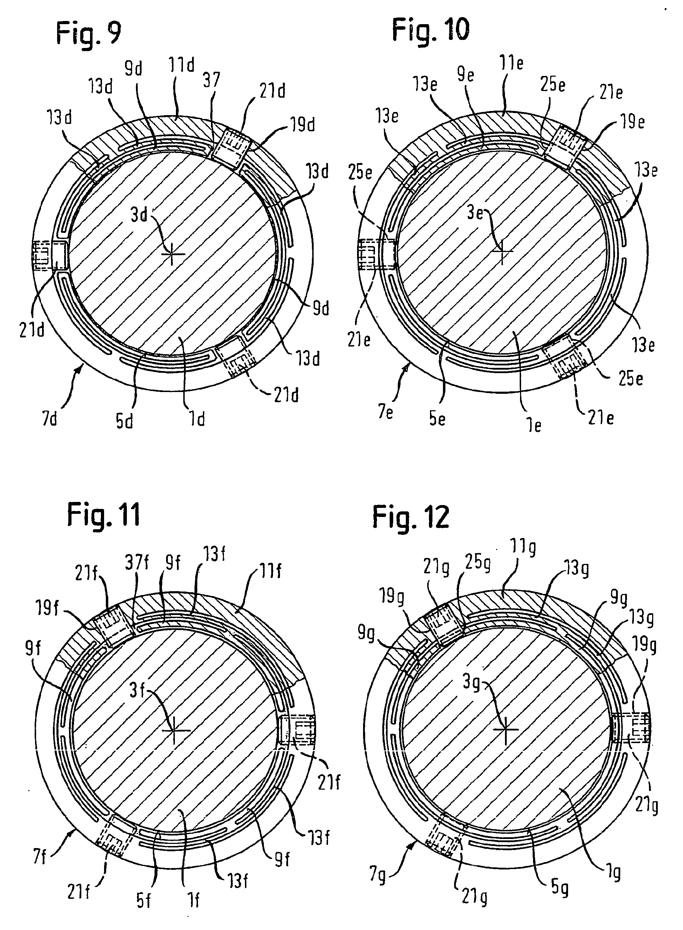

Bei den vorangegangen anhand der Figuren 1-6 erläuterten Varianten bestimmt in erster Linie die axiale Länge der die Federlenkeranordnung bildenden Hülse die Federeigenschaften. Die Abmessungen des Wuchtrings in axialer Richtung lassen sich klein halten, wenn, wie in den nachfolgend erläuterten Ausführungsbeispielen, die federnde Länge der Federlenkeranordnung sich nicht in axialer Richtung, sondern in Umfangsrichtung des Ringkörpers erstreckt. In Umfangsrichtung steht vergleichsweise viel Bauraum für die Unterbringung der Federlenkeranordnung zur Verfügung. So zeigt Figur 9 eine Variante eines Wuchtrings 7d, dessen Ringkörper 11d über mehrere Paare von in Umfangsrichtung sich erstreckenden Federstegen 13d mit den einzelnen Segmenten 9d eines in Umfangsrichtung in mehrere Segmente unterteilten Halterings verbunden sind. Der Haltering besteht im dargestellten Ausführungsbeispiel aus drei Segmenten 9d, die in Umfangsrichtung unter Bildung von Lücken 37 aufeinanderfolgen, wobei in Gewindeöffnungen 19d des Ringkörpers sitzende, radial verschraubbare Stellschrauben 21 d durch diese Lücken 37 greifen und sich unmittelbar am Außenumfang 5d des Bauteils 1d abstützen.

Die Paare der im Wesentlichen als in Umfangsrichtung gekrümmte Blattfedern ausgebildeten Federstege 13d sind mit ihren voneinander entfernten Enden jeweils mit den in Umfangsrichtung gelegenen Enden eines der Halteringsegmente 9d verbunden. Die einander benachbarten Enden der Federstege 13 des Paars sind mittig zwischen in Umfangsrichtung aufeinanderfolgenden Stellschrauben 21 d mit dem Ringkörper 11 d verbunden.

Die Halteringsegmente 9d können auf Grund ihrer Eigenelastizität am Bauteil 1d fixiert sein; sie können aber auch anderweitig befestigt sein, beispielsweise angeklebt oder angelötet oder angeschraubt sein.

Der Wuchtring 7e der Figur 10 unterscheidet sich vom Wuchtring 7d der Figur 9 im Wesentlichen nur dadurch, dass der Haltering 9e als ringförmig geschlossener Haltering ausgebildet ist, der für den Durchtritt der Stellschrauben 21e, ähnlich der Variante der Figuren 3 und 4, mit Durchgangslöchern 25e verstehen ist, durch die hindurch sich die Stellschrauben 21 e direkt am Außenumfang 5e des Bauteils 1e abstützen können. Die Federstege 13e sind jeweils in Umfangsrichtung beiderseits jeder Stellschraube 21e mit dem Haltering 9e verbunden.

Die in Figur 11 dargestellte Variante eines Wuchtrings 7f unterscheidet sich von dem Wuchtring 7d in Figur 9 lediglich dadurch, dass die einen segmentierten Haltering bildenden Segmente 9f nicht an ihren voneinander abgewandten Enden mit den in Umfangsrichtung sich erstreckenden Federstegen 13f paarweise verbunden sind, sondern jeweils in ihrem Mittelbereich zwischen zwei in Umfangsrichtung aufeinanderfolgenden Stellschrauben 21f. Die Federstege 13f jedes Paars sind dementsprechend an ihren in Umfangsrichtung entfernt gelegenen Enden mit dem Ringkörper 11f verbunden. Auch in der Variante der Figur 11 bilden die Halteringsegmente 9f Lücken 37f, durch die hindurch die Stellschrauben 21f unmittelbar am Außenumfang 5f des Bauteils 1f anliegen.

Figur 12 zeigt eine Variante eines Wuchtrings 7g, bei welcher der Haltering 9g entsprechend der Variante der Figur 10 ringförmig geschlossen ist, wobei wiederum die Stellschrauben 21g durch Durchgangslöcher 25g treten und sich unmittelbar am Außenumfang 5g des Bauteils 1g abstützen. Im Unterschied zum Wuchtring 7e der Figur 10 sind jedoch bei dem Wuchtring 7g die zwischen zwei in Umfangsrichtung aufeinanderfolgenden Stellschrauben 21g paarweise angeordneten Federstege 13g mit ihren einander benachbarten Enden mit dem Haltering 9g verbunden, während die voneinander entfernt gelegenen Enden axial beiderseits der Durchgangslöcher 25g mit dem Ringkörper 11g verbunden sind.

Es versteht sich, dass sich die Stellschrauben 21g und 21 e der in den Figuren 10 und 12 dargestellten Wuchtrings auch an dem ringförmig geschlossenen Haltering abstützen können, wie dies für den Wuchtring 7 in den Figuren 1 und 2 erläutert wurde. Die Fixierung der Halteringe an dem Bauteil kann durch Aufschrumpfen, Aufkleben, Aufschweißen erfolgen, wie dies vorangegangen erläutert wurde.

## Patentansprüche

1. Wuchtring für ein um eine Drehachse (3) rotierendes Bauteil (1), insbesondere einen Werkzeughalter oder dergleichen,
umfassend:
- einen bezogen auf eine Rotationssymmetrieachse rotationssymmetrischen Ringkörper (11),
- eine den Ringkörper (11) mit zur Drehachse (3) des Bauteils (1) im Wesentlichen paralleler Rotationssymmetrieachse radial bewegliche, jedoch axial fixiert an dem Bauteil (1) führende Führungsanordnung (13, 21c) und
- mehrere in Umfangsrichtung des Ringkörpers (11), vorzugsweise in gleichen Winkelabständen voneinander angeordnete, zwischen dem Ringkörper und dem Bauteil radial abgestützte Stellelemente (21) mit veränderbarer radialer Abstützlänge.

2. Wuchtring nach Anspruch 1, **dadurch gekennzeichnet, dass** die Führungsanordnung einen an einer zylindrischen, zur Drehachse konzentrischen Umfangsfläche des Bauteils (1) anliegenden Haltering (9) aufweist, der über eine allseitig radial auslenkbare Federlenkeranordnung (13) mit dem Ringkörper (11) verbunden ist.

3. Wuchtring nach Anspruch 2, **dadurch gekennzeichnet, dass** die Federlenkeranordnung (13) längs eines zur Rotationssymmetrieachse konzentrischen Kreises angeordnet ist und wenigstens ein im Wesentlichen in Richtung der Rotationssymmetrieachse sich erstreckendes, radial auslenkbares Federelement (13) umfasst, das - axial gesehen - mit seinem einen Endbereich (15) am Haltering (9) und mit seinem anderen Endbereich (17) mit dem Ringkörper (11) verbunden ist.

4. Wuchtring nach Anspruch 3, **dadurch gekennzeichnet, dass** das Federelement eine zur Rotationssymmetrieachse konzentrische, elastisch auslenkbare Hülse (13) ist.

5. Wuchtring nach Anspruch 4, **dadurch gekennzeichnet, dass** die Hülse (13) in Umfangsrichtung durch mehrere axial verlaufende Schlitze (27) oder Aussparungen in radial auslenkbare Federsegmente unterteilt ist.

6. Wuchtring nach Anspruch 2, **dadurch gekennzeichnet, dass** die Federlenkeranordnung in Umfangsrichtung des Ringkörpers verteilt mehrere Paare in Umfangsrichtung sich erstreckender Federstege (13d-g) umfasst, die mit ihren in Umfangsrichtung benachbarten Enden paarweise an dem Ringkörper (11d-g) oder paarweise an dem Haltering (9d-g) gehalten sind, und mit ihren in Umfangsrichtung entfernt gelegenen Enden der jeweils anderen Komponente - Haltering (9d-g) oder Ringkörper (11d-g) - gehalten sind.

7. Wuchtring nach einem der Ansprüche 2 bis 6, **dadurch gekennzeichnet, dass** der Ringkörper (11), die Federandordnung (13) und der Haltering (9) integral einteilig ausgebildet sind.

8. Wuchtring nach einem der Ansprüche 2 bis 7, **dadurch gekennzeichnet, dass** der Haltering (9, 9a,e,d) als geschlossener Ring ausgebildet ist.

9. Wuchtring nach Anspruch 8, **dadurch gekennzeichnet, dass** der Haltering (9) auf das Bauteil (1) aufschrumpfbar ist.

10. Wuchtring nach einem der Ansprüche 2 bis 7, **dadurch gekennzeichnet, dass** der Haltering (9b,d,f) als segmentierter Ring ausgebildet ist, dessen Segmente über die Federanordnung (13b,d,f) mit dem Ringkörper (11 b,d,f) verbunden sind.

11. Wuchtring nach einem der Ansprüche 1 bis 10, **dadurch gekennzeichnet, dass** die Stellelemente als radial verschraubbare Stellschrauben (21) ausgebildet sind.

12. Wuchtring nach Anspruch 11 in Verbindung mit einem der Ansprüche 2 bis 10, **dadurch gekennzeichnet, dass** die Stellschrauben (21) in Schraublöchem (19) des Ringkörpers (11) angeordnet sind und sich an dem Haltering oder direkt an dem Bauteil abstützen.

13. Wuchtring nach Anspruch 1, **dadurch gekennzeichnet, dass** die Führungsanordnung einen an einer zylindrischen, zur Drehachse (3) konzentrischen Umfangsfläche des Bauteils (1c) anliegenden Haltering (9c) aufweist, an dem der Ringkörper (11c) über mehrere in Umfangsrichtung verteilte, die Stellelemente bildende Aktuatoren (21c) mit steuerbarer radialer Abstützlänge abgestützt ist.

14. Wuchtring nach Anspruch 13, **dadurch gekennzeichnet, dass** die Aktuatoren als piezoelektrische Elemente oder Nano-Tube-Elemente ausgebildet sind.

15. Verfahren zum Auswuchten eines um eine Drehachse (3) rotierenden Bauteils mittels eines an dem Bauteil (1) angebrachten Wuchtrings (7), **dadurch gekennzeichnet, dass** an dem Bauteil (1) ein Wuchtring (7) mit einem radial beweglich an dem Bauteil (1) geführten Ringkörper (11) angebracht wird, der über mehrere in Umfangsrichtung des Ringkörpers (11), vorzugsweise in gleichen Winkelabständen voneinander angeordnete Stellelemente (21) mit veränderbarer Abstützlänge relativ zu dem Bauteil (1) abgestützt ist,
dass das Bauteil (1) zusammen mit dem Wuchtring (7) um die Drehachse (3) rotierend angetrieben und ein die Größe und Richtung der hierbei auftretenden Unwuchtkraft repräsentierender Unwuchtparameter gemessen wird,
und dass abhängig von dem gemessenen Unwuchtparameter die Abstützlänge der Stellelemente (21) verändert wird, derart, dass der Ringkörper (11) in eine die Unwuchtkraft kompensierende radiale Position verschoben wird.

16. Verfahren nach Anspruch 15, **dadurch gekennzeichnet, dass** abhängig von dem gemessenen Unwuchtparameter Längeneinstellinformationen für die Stellelemente (21) ermittelt werden.

## Claims

1. A balance ring for a component (1) rotating about a rotation axis (3), in particular a tool holder or the like, comprising:
- an annular body (11) which is rotationally symmetrical with respect to an axis of rotational symmetry,
- a guide arrangement (13, 21c) guiding the annular body (11) on the component (1) in a radially movable but axially fixed manner with an axis of rotational symmetry essentially parallel to the rotation axis (3) of the component (1), and
- a plurality of adjusting elements (21) arranged in the circumferential direction of the annular body (11), preferably at equal angular distances from one another, radially supported between the annular body and the component and having a variable radial supporting length.

2. The balance ring as claimed in claim 1, **characterized in that** the guide arrangement has a retaining ring (9) which bears against a cylindrical circumferential surface, concentric to the rotation axis, of the component (1) and which is connected to the annular body (11) via a spring link arrangement (13) radially deflectable universally.

3. The balance ring as claimed in claim 2, **characterized in that** the spring link arrangement (13) is arranged along a circle concentric to the axis of rotational symmetry and comprises at least one radially deflectable spring element (13) which extends essentially in the direction of the axis of rotational symmetry and which - as viewed axially - is connected with its one end region (15) to the retaining ring (9) and with its other end region (17) to the annular body (11).

4. The balance ring as claimed in claim 3, **characterized in that** the spring element is an elastically deflectable sleeve (13) concentric to the axis of rotational symmetry.

5. The balance ring as claimed in claim 4, **characterized in that** the sleeve (13) is subdivided in the circumferential direction into radially deflectable spring segments by a plurality of axially running slots (27) or apertures.

6. The balance ring as claimed in claim 2, **characterized in that** the spring link arrangement, in a distributed manner in the circumferential direction, comprises a plurality of pairs of spring webs (13d-g) which extend in the circumferential direction and which are held with their ends which are adjacent in the circumferential direction in pairs on the annular body (11d-g) or in pairs on the retaining ring (9d-g) and are held with their ends which are remote in the circumferential direction on the other respective component - retaining ring (9d-g) or annular body (11d-g).

7. The balance ring as claimed in one of claims 2 to 6, **characterized in that** the annular body (11), the spring arrangement (13) and the retaining ring (9) are integrally formed in one piece.

8. The balance ring as claimed in one of claims 2 to 7, **characterized in that** the retaining ring (9, 9a, e, d) is designed as a closed ring.

9. The balance ring as claimed in claim 8, **characterized in that** the retaining ring (9) can be shrunk onto the component (1).

10. The balance ring as claimed in one of claims 2 to 7, **characterized in that** the retaining ring (9b, d, f) is designed as a segmented ring, the segments of which are connected to the annular body (11b, d, f) via the spring arrangement (13b, d, f).

11. The balance ring as claimed in one of claims 1 to 10, **characterized in that** the adjusting elements are designed as adjusting screws (21) which can be screwed down radially.

12. The balance ring as claimed in claim 11 in combination with one of claims 2 to 10, **characterized in that** the adjusting screws (21) are arranged in screw holes (19) of the annular body (11) and are supported on the retaining ring or directly on the component.

13. The balance ring as claimed in claim 1, **characterized in that** the guide arrangement has a retaining ring (9c) which bears against a cylindrical circumferential surface, concentric to the rotation axis (3), of the component (1c) and on which the annular body (11c) is supported via a plurality of actuators (21c) which are distributed in the circumferential direction, form the adjusting elements and have a controllable radial supporting length.

14. The balance ring as claimed in claim 13, **characterized in that** the actuators are designed as piezoelectric elements or nanotube elements.

15. A method for balancing a component rotating about a rotation axis (3) by means of a balance ring (7) attached to the component, **characterized in that** a balance ring (7) having an annular body (11) guided on the component (1) in a radially movable manner is attached to the component, which balance ring (7) is supported relative to the component (1) via a plurality of adjusting elements (21) arranged in the circumferential direction of the annular body (11), preferably at equal angular distances from one another, and having a variable supporting length, **in that** the component (1) together with the balance ring (7) is rotationally driven about the rotation axis (3), and an unbalance parameter representing the size and direction of the unbalance force occurring in the process is measured, and **in that** the supporting length of the adjusting elements (21) is varied as a function of the measured unbalance parameter in such a way that the annular body (11) is displaced into a radial position compensating for the unbalance force.

16. The method as claimed in claim 15, **characterized in that** length-setting information for the adjusting elements (21) is determined as a function of the measured unbalance parameter.

## Revendications

1. Anneau d'équilibrage d'une partie structurelle (1) rotative autour d'un axe de rotation (3), en particulier un porte-outil ou similaire, comprenant :
- un corps annulaire (11) symétrique en rotation à un axe de symétrie en rotation,
- un ensemble de guidage (13, 21 c) guidant le corps annulaire (11) avec un axe de symétrie en rotation sensiblement parallèle à l'axe de rotation (3) de la partie structurelle (1), mobile dans le sens radial, toutefois fixé dans le sens axial sur la partie structurelle (1) et
- plusieurs éléments de réglage (21) disposés dans le sens périphérique du corps annulaire (11), de préférence à des distances angulaires identiques les uns des autres, en appui dans le sens radial entre le corps annulaire et la partie structurelle (21) avec une longueur d'appui radiale modifiable.

2. Anneau d'équilibrage selon la revendication 1, **caractérisé en ce que** l'ensemble de guidage présente un anneau de retenue (9) reposant sur une surface périphérique cylindrique, concentrique par rapport à l'axe de rotation de la partie structurelle (1), lequel est relié au corps annulaire (11) par un ensemble de bras oscillants (13) pouvant être dévié radialement de tous côtés.

3. Anneau d'équilibrage selon la revendication 2, **caractérisé en ce que** l'ensemble de bras oscillants (13) est disposé le long d'un cercle concentrique par rapport à l'axe de symétrie en rotation et comporte au moins un élément de ressort (13) pouvant être dévié radialement, s'étendant sensiblement en direction de l'axe de symétrie en rotation, lequel élément est relié, vu dans le sens axial, par sa zone d'extrémité (15) sur l'anneau de retenue (9) et par son autre zone d'extrémité (17) au corps annulaire (11).

4. Anneau d'équilibrage selon la revendication 3, **caractérisé en ce que** l'élément de ressort est une douille (13) pouvant être déviée élastiquement, concentrique par rapport à l'axe de symétrie en rotation.

5. Anneau d'équilibrage selon la revendication 4, **caractérisé en ce que** la douille (13) est divisée dans le sens périphérique par plusieurs fentes (27) s'étendant axialement ou évidements dans des segments de ressort pouvant être déviés radialement.

6. Anneau d'équilibrage selon la revendication 2, **caractérisé en ce que** l'ensemble de bras oscillants comporte plusieurs paires de barrettes à ressort (13d-g) s'étendant dans le sens périphérique, réparties dans le sens périphérique du corps annulaire, qui sont maintenues avec leurs extrémités contiguës dans le sens périphérique par paires sur le corps annulaire (11 d-g) ou par paires sur l'anneau de retenue (9d-g), et sont maintenues par leurs extrémités placées à distance dans le sens périphérique de l'autre partie structurelle respective - anneau de retenue (9d-g) ou corps annulaire (11d-g).

7. Anneau d'équilibrage selon l'une quelconque des revendications 2 à 6, **caractérisé en ce que** le corps annulaire (11), l'ensemble de bras oscillants (13) et l'anneau de retenue (9) sont réalisés intégralement d'un seul tenant.

8. Anneau d'équilibrage selon l'une quelconque des revendications 2 à 7, **caractérisé en ce que** l'anneau de retenue (9, 9a, e, d) est réalisé comme un anneau fermé.

9. Anneau d'équilibrage selon la revendication 8, **caractérisé en ce que** l'anneau de retenue (9) sur la partie structurelle (1) est thermorétractable.

10. Anneau d'équilibrage selon l'une quelconque des revendications 2 à 7, **caractérisé en ce que** l'anneau de retenue (9b, d, f) est réalisé comme un anneau segmenté, dont les segments sont reliés par l'ensemble de ressort (13b, d, f) au corps annulaire (11 b, d, f).

11. Anneau d'équilibrage selon l'une quelconque des revendications 1 à 10, **caractérisé en ce que** les éléments de réglage sont réalisés comme des vis de réglage pouvant être vissées radialement (21).

12. Anneau d'équilibrage selon la revendication 11 en liaison avec l'une quelconque des revendications 2 à 10, **caractérisé en ce que** les vis de réglage (21) sont disposées dans des trous filetés (19) du corps annulaire (11) et s'appuient contre l'anneau de retenue ou directement contre la partie structurelle.

13. Anneau d'équilibrage selon la revendication 1, **caractérisé en ce que** l'ensemble de guidage présente un anneau de retenue (9c) reposant sur une surface périphérique de la partie structurelle (1 c) cylindrique, concentrique par rapport à l'axe de rotation (3), sur lequel anneau le corps annulaire (11 c) est en appui par le biais de plusieurs actionneurs (21 c) répartis dans le sens périphérique, formant les éléments de réglage avec une longueur d'appui radiale pouvant être commandée.

14. Anneau d'équilibrage selon la revendication 13, **caractérisé en ce que** les actionneurs sont réalisés comme des éléments piézoélectriques ou des éléments nanotubes.

15. Procédé d'équilibrage d'une partie structurelle rotative autour d'un axe de rotation (3) à l'aide d'un anneau d'équilibrage (7) monté sur la partie structurelle (1), **caractérisé en ce qu'**un anneau d'équilibrage (7) est monté sur la partie structurelle (1) avec un corps annulaire (11) guidé de manière mobile dans le sens radial sur la partie structurelle (1), lequel corps est en appui par le biais de plusieurs éléments de réglage (21) disposés dans le sens périphérique du corps annulaire (11), de préférence à des distances angulaires identiques les uns des autres avec une longueur d'appui modifiable par rapport à la partie structurelle (1),
**en ce que** la partie structurelle (1) est entraînée, conjointement avec l'anneau d'équilibrage (7), en rotation autour de l'axe de rotation (3) et un paramètre de défaut d'équilibrage représentant la grandeur et la direction de la force de défaut d'équilibrage survenant à cette occasion est mesuré,
et **en ce qu'**en fonction du paramètre de défaut d'équilibrage mesuré, la longueur d'appui des éléments de réglage (21) est modifiée de telle manière que le corps annulaire (11) soit décalé dans une position radiale compensant la force de défaut d'équilibrage.

16. Procédé selon la revendication 15, **caractérisé en ce que** des informations de réglage de longueur pour les éléments de réglage (21) sont déterminées en fonction du paramètre de défaut d'équilibrage mesuré.
